# EUROPÄISCHE PATENTANMELDUNG

(11) **EP 0 580 006 A1**
(43) Veröffentlichungstag der Anmeldung: **26.01.1994**
(21) Anmeldenummer: 93110749.4
(22) Anmeldetag: 06.07.1993
(51) Int. Cl.: B60B 39/10

(54) **Antiaquaplaningsystem für ein Strassenfahrzeug**

(30) Priorität: 24.07.1992 DE 4224452
(71) Anmelder: TEMIC TELEFUNKEN microelectronic GmbH, D-74072 Heilbronn (DE)
(72) Erfinder: Bodier, Rüdiger, D-85653 Aying (DE); Schmidt, Hartmut, Dr., D-85238 Petershausen (DE)

(57) **Zusammenfassung**

Antiaquaplaningsystem für ein Straßenfahrzeug mit Mitteln zur Erhöhung der Radhaftung eines Kraftfahrzeugs (Kfz) bei Nässe, Glätte und verschmutzten Fahrbahnen, wobei ein rotierendes System 2, 3, 4 bei Nässe den Wasserfilm verdrängt, wodurch die Radhaftung wesentlich erhöht wird, dieses System bei Eis- oder Schneeglätte die Oberfläche aufrauht; durch die so erzielte Profilierung die Reibung zwischen Reifen und Straße und damit die Radhaftung erhöht und dieses System bei verschmutzter Fahrbahn (Sand, Split, nasses Laub o.ä.) die Schmutzschicht verdrängt und dadurch die Radhaftung verbessert.

## Beschreibung

Die Erfindung betrifft ein Antiaquaplaningsystem für Straßenfahrzeuge mit Mitteln zur Erhöhung der Radhaftung eines Kraftfahrzeugs (Kfz) bei Nässe, Glätte und verschmutzten Fahrbahnen gemäß der älteren, nicht vorveröffentlichten DE 41 15 367 A1.

Bisher hat man in sicherheitskritischen Fahrsituationen die Optimierung von fahrzeuginternen Abläufen, wie z.B. beim ABS die Verhinderung der Radblockierung, vorgeschlagen.

Aufgabe der Erfindung ist es, durch aktive Beeinflussung des Fahrzeug-/Fahrbahninterfaces die Umweltbedingungen so zu verändern, daß insbesondere in Notsituationen zusätzliche Sicherheitsreserven aufgebaut und ausgenutzt werden. Die Lösung gemäß der Erfindung ist in Anspruch 1 enthalten. Sie verändert die Oberflächenstruktur von Eis- bzw. Schneeflächen oder verdrängt Wasser oder Schmutz aus der Fahrspur.

Nachfolgend ist beispielhaft die Funktionsweise eines Ausführungsbeispiels der Erfindung bei Nässe und Eis-/Schneeglätte dargestellt:

### Nässe

Vor den Rädern, bevorzugt vor den Vorderrädern, befindet sich jeweils ein Elektromotor, an dessen Antriebswelle eine "Schleudervorrichtung" befestigt ist. Im Gefahrenfalle, d.h. im Falle des Aufschwimmens bei Aquaplaning, wird der Motor manuell oder automatisch aktiviert. Die Schleudervorrichtung rotiert so, daß der Wasserfilm quer zur Fahrspur verdrängt wird. Dadurch ist ein guter Kontakt zwischen Reifen und Fahrbahn wieder hergestellt. Dieser Effekt ist ebenso bei einer Notbremsung auf regenasser Fahrbahn nutzbar.

### Eis-/Schneeglätte

Vor den Rädern, bevorzugt vor den Vorderrädern, befindet sich jeweils ein Elektromotor, an dessen Antriebswelle ein Schleudervorrichtung befestigt ist. Im Gefahrenfalle, d.h. bei Notbremsungen auf Glätte wird der Motor manuell oder automatisch aktiviert. Die Schleudervorrichtung rotiert so, daß die Eisschicht quer zur Fahrbahn aufgerauht und profiliert wird. Diese Profilierung des Eises führt zu einer besseren Straßenhaftung, einmal durch den besseren Eingriff der Reifen, zum anderen durch das Abführen des durch den "Schlittschuheffekt" gebildeten Wassers. Dieser Effekt Ist auch während der Vortriebsphase (verbesserte Traktion) nutzbar.

Die Erfindung wird anhand einer beigefügten Zeichnung näher erläutert. Darin ersichtlich Ist einen Elektromotor, der mit 12 V Gleichstrom (= übliche Bordstromversorgung) angetrieben wird. An der Welle des Motors sind zwei Stahlseilabschnitte mit einem Durchmesser von 1 mm befestigt. Die freien Enden der Stahlseile sind ausgefranst (pinselartig) und mit einer Quetschklemme gesichert. Der Motor wird entweder manuell oder vollautomatisch durch den Bordcomputer 6 bei erkannter Aquaplaninggefahr gestartet, so daß die pinselartigen Seilenden den Wasserfilm vor den Reifen beseitigen.

Mit der beschriebenen Anordnung wurden im Wasserkanal Versuche unter folgenden labormäßigen Bedingungen durchgeführt:
- Simulierte Fahrgeschwindigkeit 60 - 70 km/h,
- Motordrehzahl 16 000 U/min und
- Wassertiefe 8 mm.

Der Wasserfilm konnte in zusammenhängenden Gebieten bis zum Grund beseitigt werden.

Diese Ergebnisse lassen eine deutliche Verringerung des Aquaplaningeffektes unter Originalfahrbedingungen erwarten.

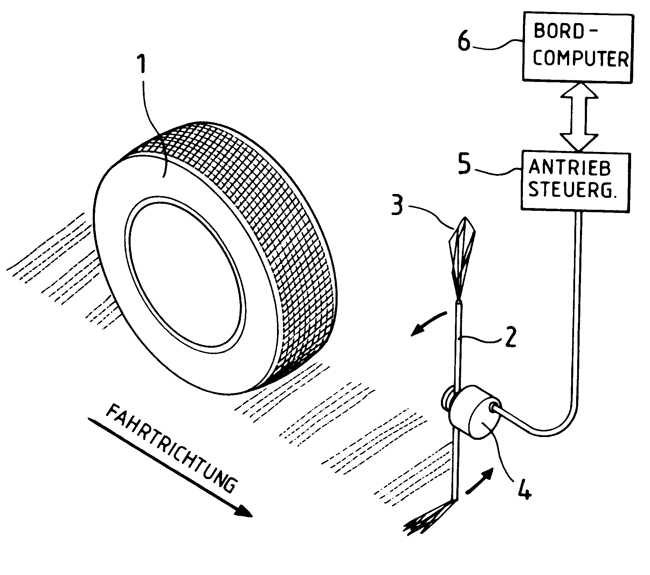

## Patentansprüche

1. Antiaquaplaningsystem für ein Straßenfahrzeug mit Mitteln zur Erhöhung der Radhaftung eines Kraftfahrzeugs (Kfz) bei Nässe, Glätte und verschmutzten Fahrbahnen, **gekennzeichnet** durch folgende Maßnahmen:
- Daß ein rotierendes System (2,3,4) bei Nässe den Wasserfilm verdrängt; dadurch die Radhaftung wesentlich erhöht,
- dieses System bei Eis- oder Schneeglätte die Oberfläche aufrauht; durch die so erzielte Profilierung die Reibung zwischen Reifen und Straße und damit die Radhaftung erhöht,
- dieses System bei verschmutzter Fahrbahn (Sand, Split, nasses Laub o.ä.) die Schmutzschicht verdrängt und dadurch die Radhaftung verbessert.

2. System nach Anspruch 1, **dadurch gekennzeichnet,** daß die Oberfläche positiv im Sinne der Haftung beeinflussende Mittel wie Seile, Bänder, Ketten und deren Verknüpfungen als rotierendes System vor den Rädern auf der Fahrbahn wirken.

3. System nach Anspruch 1 oder 2, **dadurch gekennzeichnet,** daß es elektrisch, pneumatisch hydraulisch oder durch Abgriff einer Kfz-eigenen Rotationsbewegung angetrieben wird.

4. System nach einem der Ansprüche 1 bis 3, **dadurch gekennzeichnet,** daß es per Handschaltung oder vollautomatisch aktiviert wird.

5. System nach einem der Ansprüche 1 bis 4, **dadurch gekennzeichnet,** daß die Rotationsachse der Drehbewegung entweder längs, quer, hoch oder aus Kombinationen dieser Richtungen angeordnet sein kann.

6. System nach einem der Ansprüche 1 bis 5, **dadurch gekennzeichnet,** daß es flexibel ausgebildet ist und sich somit an die Fahrbahnstruktur anpaßt.
